# EUROPÄISCHE PATENTANMELDUNG

(11) **EP 1 276 084 A1**
(43) Veröffentlichungstag der Anmeldung: **15.01.2003**
(21) Anmeldenummer: 01116527.1
(22) Anmeldetag: 09.07.2001
(51) Int. Cl.: G08B 29/14

(54) **Verfahren und Vorrichtung zum Erzeugen von Rauchaerosolen**

(71) Anmelder: Siemens Building Technologies AG, 8034 Zürich (CH)
(72) Erfinder: Covelli, Bruno, Dr., 5034 Suhr (CH); Späni, Markus, 8608 Bubikon (CH); Alder, Rudolf, 8634 Hombrechtikon (CH)
(74) Vertreter: Dittrich, Horst, Dr.

(57) **Zusammenfassung**

Bei dem Verfahren zum Erzeugen von Rauchaerosolen für Projektierung, Überprüfung oder Demonstration von Brandmeldeeinrichtungen wird ein Brandmaterial pyrolisiert, wodurch die Brandaerosole freigesetzt werden. Das Brandmaterial wird durch ein brennbares Gas pyrolisiert und es wird ein künstlicher Brand mit einstellbarer Heizleistung erzeugt, wobei für die Erzeugung unterschiedlicher Brandaerosole und/ oder unterschiedlicher Brandgase das Brandmaterial in weiten Grenzen frei wählbar ist. Bei dem künstlichen Brand wird ein definierter und reproduzierbarer Heissgasstrom (H) erzeugt wird, welcher die Brandaerosole nach oben transportiert.

Die Vorrichtung zur Durchführung des Verfahrens besteht aus einem Rauchgenerator (1) und einer Gasversorgung (11). Der Rauchgenerator (1) enthält ein Behältnis (6) zur Aufnahme des Brandmaterials, welches oberhalb eines an die Gasversorgung (11) angeschlossenen Brenners (5) angeordnet ist, und Mittel (9) zur Ausrichtung und Stabilisierung der Flamme des Brenners (5).

## Beschreibung

Die vorliegende Erfindung betrifft ein Verfahren zum Erzeugen von Rauchaerosolen für Projektierung, Überprüfung oder Demonstration von Brandmeldeeinrichtungen, bei welchem ein Brandmaterial pyrolisiert wird und dadurch die Brandaerosole freigesetzt werden.

Es ist bekannt, zur sachgerechten Projektierung, Überprüfung und Demonstration von Brandmeldeeinrichtungen Brandversuche durchzuführen, bei denen das Brandmaterial so weit erhitzt wird, dass ein Schwelbrand entsteht, bei dem Rauch erzeugt wird. Bei der Projektierung von Brandmeldeeinrichtungen oder Brandmeldesystemen dienen diese Versuche zur Festlegung der Befestigungspunkte der Brandmelder in dem zu schützenden Objekt. Denn jedes Objekt weist auf Grund der Geometrie und seiner Klimatisierung unterschiedliche Strömungsverhältnisse auf, welche bei der Projektierung von Brandmeldeeinrichtungen unbedingt berücksichtigt werden müssen. Bei der Überprüfung von Brandmeldeeinrichtungen oder Brandmeldesystemen dienen die Versuche zur Feststellung, ob die Befestigungspunkte der Brandmelder eventuell an geänderte Umgebungsbedingungen anzupassen sind. Und schliesslich dienen die genannten Versuche auch dazu, die Effektivität einer Brandmeldeeinrichtung oder eines Brandmeldesystems zu demonstrieren, um die Kaufentscheidung eines potenziellen Kunden entsprechend zu beeinflussen.

Bei einem in der DE-C-43 29 847 (US-A-5 644 071) beschriebenen Verfahren der eingangs genannten Art ist die Temperatur der Erwärmung des Brandmaterials in Abhängigkeit von der Erwärmungszeit vorgegeben, wobei das Brandmaterial durch einen so genannten Prüfling, beispielsweise ein kunststoffummanteltes elektrisches Kabel, gebildet ist. Dieses Kabel wird in einer Vorheizphase langsam auf die Pyrolysetemperatur erwärmt und anschliessend wird die Temperatur auf die Schwelbrandtemperatur erhöht und durch eine Stromregelung über eine definierte Zeitspanne konstant gehalten.

Da dieses bekannte Verfahren der Pyrolysephase und der Schwelbrandphase eines Elektrobrandes entspricht, ist seine Anwendung im wesentlichen auf Brandmeldeeinrichtungen in elektrischen und elektronischen Anlagen, wie beispielsweise Schaltschränke und dergleichen, beschränkt. Der bei der Pyrolyse frei werdende Rauch enthält Teer und andere geruchsintensive Flüssig- und Feststoffe, die sich im Inneren des zu überprüfenden Gebäudes ablagern und dabei Wände, Fussböden und Einrichtungsgegenstände dauerhaft schädigen. Da ausserdem die Annahme, dass der Prüfling bei einer konstanten Stromzufuhr eine konstante Menge von Rauchaerosolen freisetzt, nur sehr eingeschränkt zutrifft, ist dieses Verfahren nur bedingt dazu geeignet, die im Brandfall sich entwickelnde Rauchgasströmung realitätsnah und messbar zu simulieren.

Bei einem in der DE-A-199 26 773 beschriebenen Verfahren zur Funktionsprüfung und zur Demonstration von Brandmelde- und Rauchabzugsanlagen wird in einem Brandpool eine entsprechend der Raumgrösse festgelegt Menge eines Brandmaterials, beispielsweise Methanol, entzündet, wobei der Energieinhalt in der Grössenordnung eines Entstehungsbrandes bis zur Grenze eines entwickelten Brandes liegen kann. Um den Heissgasstrom auch optisch sichtbar zu machen, wird in diesen ein in einem Rauchgenerator erzeugter Paraffinaerosol-Kaltrauch injiziert. Es ist offensichtlich, dass dieses Verfahren nicht so sehr zur Funktionsprüfung von Brandmeldeanlagen, sondern viel eher zur Prüfung von Rauchabzugsanlagen dient. Durch die einmal festgelegte Menge des Brandstoffes ist ausserdem die Heizleistung definiert und kann im Rahmen der Funktionsprüfung nicht variiert werden. Diese festgelegte Heizleistung macht dieses Verfahren praktisch ungeeignet für die Abnahme einer Brandmeldeanlage und sie erschwert auch die realitätsnahe Nachbildung verschiedener Brandarten.

Durch die Erfindung soll nun ein Verfahren der eingangs genannten Art angegeben werden, welches eine realitätsnahe Simulation von Bränden und damit eine Überprüfung und Demonstration von Brandmeldeanlagen unter möglichst realistischen Bedingungen ermöglicht. Das Verfahren soll ausserdem die Wahl der am besten geeigneten Brandmelder und deren Parametrierung unterstützen.

Die gestellte Aufgabe wird erfindungsgemäss dadurch gelöst, dass das Brandmaterial durch ein brennbares Gas pyrolisiert und ein künstlicher Brand mit einstellbarer Heizleistung erzeugt wird, wobei für die Erzeugung unterschiedlicher Brandaerosole und/oder unterschiedlicher Brandgase das Brandmaterial in weiten Grenzen frei wählbar ist.

Beim erfindungsgemässen Verfahren wird also nicht immer das gleiche Brandmaterial pyrolisiert und dadurch immer nur eine Art von Aerosolen erzeugt, sondern es ist die Erzeugung unterschiedlicher Aerosole und unterschiedlicher Brandgase möglich, was die Simulation realitätsnaher Brandsituationen ermöglicht. Da die Heizleistung einstellbar ist, können real vorkommende Aerosole einfach nachgebildet werden.

Eine erste bevorzugte Ausführungsform des erfindungsgemässen Verfahrens ist dadurch gekennzeichnet, dass bei dem künstlichen Brand ein definierter und reproduzierbarer Heissgasstrom erzeugt wird, welcher die Brandaerosole nach oben transportiert.

Eine zweite bevorzugte Ausführungsform des erfindungsgemässen Verfahrens ist dadurch gekennzeichnet, dass die Einstellung der Heizleistung durch Regelung der Zufuhr des brennbaren Gases erfolgt.

Die Erfindung betrifft weiter eine Vorrichtung zur Durchführung des genannten Verfahrens, mit einem Behältnis zur Aufnahme des Brandmaterials.

Die erfindungsgemässe Vorrichtung ist dadurch gekennzeichnet, dass das Behältnis oberhalb eines an eine Gasversorgung angeschlossenen Brenners angeordnet ist, und dass Mittel zur Ausrichtung und Stabilisierung der Flamme des Brenners vorgesehen sind.

Durch den Brenner und die Gasversorgung kann die Heizleistung sehr genau und reproduziebar eingestellt werden, und die Mittel zur Ausrichtung und Stabilisierung der Flamme des Brenners ermöglichen die Ausbildung eines definierten, nach oben steigenden Heizgasstroms, der die Rauchaerosole mitnimmt.

Eine erste bevorzugte Ausführungsform der erfindungsgemässen Vorrichtung ist dadurch gekennzeichnet, dass die genannten Mittel ein den Brenner und das Behältnis umgebendes Strahlimpulsrohr umfassen.

Eine zweite bevorzugte Ausführungsform der erfindungsgemässen Vorrichtung ist dadurch gekennzeichnet, dass die genannten Mittel einen am Behältnis vorgesehenen Deckel umfassen, welcher einen Kamin bildet oder mit einem solchen versehen ist. Der Deckel ist am Behältnis fixierbar, vorzugsweise mit diesem verschraubbar.

Eine dritte bevorzugte Ausführungsform der erfindungsgemässen Vorrichtung ist dadurch gekennzeichnet, dass das Behältnis tiegelartig ausgebildet ist.

Eine vierte bevorzugte Ausführungsform ist dadurch gekennzeichnet, dass am oberen Ende des Kamins eine sieb- oder gitterartige Abdeckung vorgesehen ist.

Eine fünfte bevorzugte Ausführungsform ist dadurch gekennzeichnet, dass der Brenner an die Gasversorgung über eine mindestens ein Regelventil enthaltende Leitung angeschlossen ist.

Eine sechste bevorzugte bevorzugte Ausführungsform der erfindungsgemässen Vorrichtung ist dadurch gekennzeichnet, dass der Brenner, das Behältnis und das Strahlimpulsrohr von einer Schutzabdeckung umgeben sind.

Gemäss einer weiteren bevorzugten Ausführungsform sind der Brenner, das Behältnis und die Schutzabdeckung so dimensioniert, dass die Vorrichtung in einem Transportbehälter von der Art eines flugzeugtauglichen Koffers transportierbar ist.

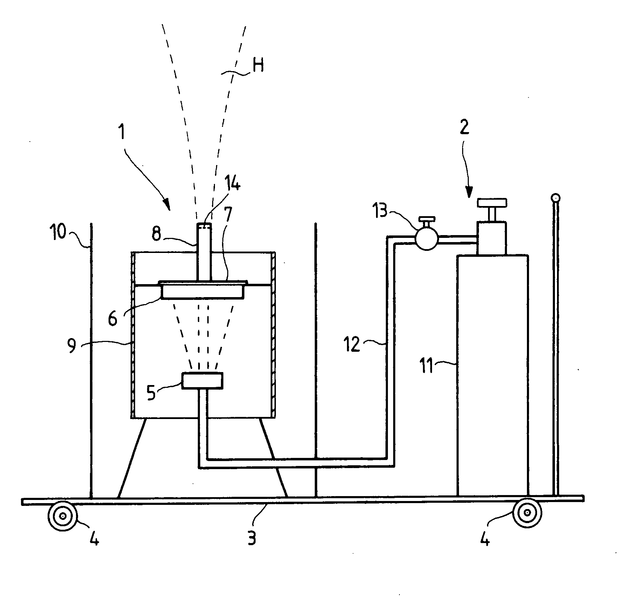

Im folgenden wird die Erfindung anhand eines Ausführungsbeispiels und der einzigen Zeichnung näher erläutert, wobei die Zeichnung eine schematische Darstellung einer erfindungsgemässen Vorrichtung zeigt: Diese besteht darstellungsgemäss aus einem Rauchgenerator 1 und einer Gasversorgung 2, welche beispielsweise auf einer gemeinsamen Basisplatte 3 angeordnet sein können. Die Basisplatte 3 kann mit Rädern 4 versehen sein, so dass die Vorrichtung als fahrbares Wägelchen ausgebildet ist.

Der Rauchgenerator 1 besteht aus einem Brenner 5, einem oberhalb des Brenners 5 angeordneten tiegelförmigen Behältnis 6 zur Aufnahme von Brandmaterial, einem das Behältnis 6 abdeckenden Deckel 7 mit einem Kamin 8, einem den Brenner 5 und das Behältnis 6 umgebenden Strahlimpulsrohr 9 und aus einer Schutzabdeckung 10, in die der Brenner 5, das Behältnis 6 und das Strahlimpulsrohr 9 eingebaut sind. Die Gasversorgung 2 ist durch eine handelsübliche Gasflasche 11, beispielsweise eine Propangasflasche, und eine von dieser zum Brenner 5 führende Verbindungsleitung 12 mit einem Regelventil 13 gebildet. Dieses ist ein Standard-Druckhalteventil zur Einstellung eines wählbaren Gasdrucks in der Leitung 12 und damit auch zum Einstellen der Brennerleistung. Unter Umständen können auch zwei Ventile vorgesehen sein, ein grobes Standard-Druckhalteventil zur Grobeinstellung des Gasdrucks und ein Feinregulierventil zum Einstellen der Brennerleistung.

Der zur Abgabe der gewünschten Brandgase/Rauchaerosole geeignete Brandstoff wird in das Behältnis 6 gefüllt und mit dem Ventil 13 wird die gewünschte Abbrandleistung oder Brandlast eingestellt. Der Brandstoff kann fest oder flüssig sein, wobei ein flüssiger Brandstoff den Vorteil hat, dass mit Hilfe einer geeigneten Dosiereinrichtung, beispielsweise von der Art wie sie zur intravenösen Verabreichung von Medikamenten verwendet wird, die Menge des Brandstoffs sehr genau abgemessen und das Einfüllen des Brandstoffs in das Behältnis 6 automatisiert werden kann. Der Deckel 7 dient dazu, die Sauerstoffzufuhr so weit zu unterdrücken, dass sich der Brandstoff nicht voll entzünden kann und dass im Bereich der Flamme des Brenners 5 keine brennbaren Brandgase austreten. Als Sicherung zur Erschwernis einer Entzündung der Brandgase dient eine am oberen Ende des Kamins 8 angeordnete sieb- oder gitterartige Abdeckung 14.

Durch das Strahlimpulsrohr 9 wird die Flamme des Brenners stabilisiert und ausgerichtet und es wird ein definierter Heizgasstrom H erzeugt, der durch den Kamin 8 nach oben steigt und die Rauchaerosole mitnimmt. Der Deckel 7 kann am Behältnis 6 fixiert, beispielsweise mit diesem verschraubt sein, um ein seitliches Ausströmen der Brandgase aus dem Reaktionsraum zu verhindern. Bei gefährlichen Situationen kann der Brenner durch Unterbrechen der Gaszufuhr durch das Ventil 13 abgeschaltet werden.

Praktische Versuche haben gezeigt, dass schon mit relativ klein dimensionierten Brennern 5 und Behältnissen 6 auch in relativ hohen Räumen mit einer Höhe von etwa 10 Metern realistische Brandsimulationen vorgenommen werden können. Die Abmessungen bei diesen Versuchen waren die folgenden:
- Durchmesser des Brenners 5: 50 mm
- Durchmesser des Behältnisses 6: 130 mm
- Durchmesser des Kamins 8: 42 mm
- Höhe des Kamins 8: 250 mm

Die genannten Versuche zeigen, dass es möglich ist, den Rauchgenerator 1 als tragbares Gerät auszubilden und so zu dimensionieren, dass er zusammen mit der Basisplatte 3 und der Gasleitung 12 mit dem Ventil 13 in einem flugzeugtauglichen Transportkoffer untergebracht werden kann. Die Gasflasche 11 würde selbstverständlich nicht in diesem Koffer mittransportiert werden.

Der Einsatzbereich des Rauchgenerators sind Abnahmetests, Wiederholungsprüfungen, Demonstrationen und die Projektierung von Brandmeldeanlagen (Platzierung, Wahl und Parametrisierung der Brandmelder) auch bei schwieriger Umgebung.

## Patentansprüche

1. Verfahren zum Erzeugen von Rauchaerosolen für Projektierung, Überprüfung oder Demonstration von Brandmeldeeinrichtungen, bei welchem ein Brandmaterial pyrolisiert wird und dadurch die Brandaerosole freigesetzt werden, **dadurch gekennzeichnet, dass** das Brandmaterial durch ein brennbares Gas pyrolisiert und ein künstlicher Brand mit einstellbarer Heizleistung erzeugt wird, wobei für die Erzeugung unterschiedlicher Brandaerosole und/oder unterschiedlicher Brandgase das Brandmaterial in weiten Grenzen frei wählbar ist.

2. Verfahren nach Anspruch 1, **dadurch gekennzeichnet, dass** bei dem künstlichen Brand ein definierter und reproduzierbarer Heissgasstrom (H) erzeugt wird, welcher die Brandaerosole nach oben transportiert.

3. Verfahren nach Anspruch 2, **dadurch gekennzeichnet, dass** die Einstellung der Heizleistung durch Regelung der Zufuhr des brennbaren Gases erfolgt.

4. Vorrichtung zur Durchführung des Verfahrens nach einem der Ansprüche 1 bis 3, mit einem Behältnis (6) zur Aufnahme des Brandmaterials, **dadurch gekennzeichnet, dass** das Behältnis (6) oberhalb eines an eine Gasversorgung (11) angeschlossenen Brenners (5) angeordnet ist, und dass Mittel zur Ausrichtung und Stabilisierung der Flamme des Brenners (5) vorgesehen sind.

5. Vorrichtung nach Anspruch 4, **dadurch gekennzeichnet, dass** die genannten Mittel ein den Brenner (5) und das Behältnis (6) umgebendes Strahlimpulsrohr (9) umfassen.

6. Vorrichtung nach Anspruch 5, **dadurch gekennzeichnet, dass** die genannten Mittel einen am Behältnis (6) vorgesehenen Deckel (7) umfassen, welcher einen Kamin (8) bildet oder mit einem solchen versehen ist.

7. Vorrichtung nach Anspruch 6 oder 7, **dadurch gekennzeichnet, dass** der Deckel (7) am Behältnis (6) fixierbar, vorzugsweise mit diesem verschraubbar ist.

8. Vorrichtung nach einem der Ansprüche 4 bis 7, **dadurch gekennzeichnet, dass** das Behältnis (6) tiegelartig ausgebildet ist.

9. Vorrichtung nach einem der Ansprüche 6 bis 8, **dadurch gekennzeichnet, dass** am oberen Ende des Kamins (8) eine sieb- oder gitterartige Abdeckung (14) vorgesehen ist

10. Vorrichtung nach einem der Ansprüche 4 bis 9, **dadurch gekennzeichnet, dass** der Brenner (5) an die Gasversorgung (11) über eine mindestens ein Regelventil (13) enthaltende Leitung (12) angeschlossen ist.

11. Vorrichtung nach einem der Ansprüche 5 bis 10, **dadurch gekennzeichnet, dass** der Brenner (5), das Behältnis (6) und das Strahlimpulsrohr (9) von einer Schutzabdeckung (10) umgeben sind.

12. Vorrichtung nach Anspruch 11, **dadurch gekennzeichnet, dass** der Brenner (5), das Behältnis (6), das Strahlimpulsrohr (9) und die Schutzabdeckung (10) so dimensioniert sind, dass die Vorrichtung in einem Transportbehälter von der Art eines flugzeugtauglichen Koffers transportierbar ist.
